# EUROPÄISCHE PATENTANMELDUNG

(11) **EP 3 542 618 A1**
(43) Veröffentlichungstag der Anmeldung: **25.09.2019**
(21) Anmeldenummer: 19163740.4
(22) Anmeldetag: 19.03.2019
(51) Int. Cl.: A01G 13/06, A01G 17/06

(54) **SPALIEROBSTANLAGE UND HEIZEINRICHTUNG FÜR EINE SOLCHE SPALIEROBSTANLAGE**

(30) Priorität: 22.03.2018 DE 102018106902
(71) Anmelder: Merkle, Georg, 74343 Sachsenheim (DE)
(72) Erfinder: Merkle, Georg, 74343 Sachsenheim (DE)
(74) Vertreter: Herrmann, Jochen

(57) **Zusammenfassung**

Die Erfindung betrifft eine Spalierobstanlage, insbesondere Weinbauanlage, für in Reihe (100) gestellte Obstpflanzen (20), die an einem Befestigungsdraht (32) vorzugsweise eines Drahtrahmengerüsts (30) befestigbar sind, wobei der Befestigungsdraht (32) zwischen Tragpfosten (31) einer Pflanzreihe (100) gespannt ist und wobei eine Heizeinrichtung vorgesehen ist. Die Heizeinrichtung umfasst je Pflanzreihe (100) mehrere stirnseitig aneinander gereihte Hohlprofile (40) mit einer Längserstreckung entlang einer Längsachse (104) und ein in den Hohlprofilen (40) geführtes Heizkabel (10) aufweist, das über die Hohlprofile (40) an dem Befestigungsdraht (32) befestigt ist. Ferner umfasst die Heizeinrichtung Verbindungshülsen (50) zum Verbinden aneinander gereihter Hohlprofile (40.1, 40.2) miteinander im Bereich ihrer Stirnseiten. Die Verbindungshülsen (50) sind jeweils an einem ersten Ende (43.1) eines ersten Hohlprofils (40.1) derart ausgebildet oder befestigt, dass sie in Längsrichtung verschiebefest bezüglich des ersten Hohlprofils (40.1) sind. Ferner sind sie an einem zweiten Ende (43.2) eines stirnseitig an das erste Ende (43.1) des ersten Hohlprofils (40.1) angrenzenden anderen Hohlprofils (40.2) derart mit einem Schiebesitz befestigt, dass eine relative Verschiebbarkeit zwischen der Verbindungshülse (50) und dem anderen Hohlprofil (40.2) in Längsrichtung ermöglicht ist.

## Beschreibung

Die vorliegende Erfindung betrifft eine Spalierobstanlage, insbesondere Weinbauanlage, für in Reihe gestellte Obstpflanzen, die an einem Befestigungsdraht befestigbar sind. Der Befestigungsdraht ist vorzugweise Teil eines Drahtrahmengerüsts und zwischen Tragpfosten einer Pflanzreihe gespannt. Die Spalierobstanlage verfügt über eine Heizeinrichtung zum Schutz der Obstpflanzen vor Kälte. Die Erfindung betrifft außerdem eine Heizeinrichtung für eine solche Spalierobstanlage oder Weinbauanlage.

Bei der gewerbsmäßigen Erzeugung von Obst stellt Frost insbesondere dann ein Problem dar, wenn im Frühjahr die Obstpflanzen zum Austrieb ansetzen. Die jungen Triebe sind besonders anfällig für Temperaturen unter 0 °C. Wenn ein Trieb längere Zeit dem Frost ausgesetzt ist, stirbt der Trieb ab und die Obstpflanze kann hier keine Frucht mehr entwickeln. Besonders in Spalierobstanlagen, in denen eine große Anzahl von Pflanzen an einem Ort gesetzt ist, kann bereits eine Frostnacht zu massiven Ernteausfällen führen.

Dieses Problem ist seit langem bekannt und es werden verschiedene aktive Schutzmethoden eingesetzt, um Spalierobstanlagen insbesondere in Frostnächten zu schützen. Diese Methoden umfassen:
1. den Einsatz von Heizungen,
2. den Einsatz von Windmaschinen oder Hubschraubern,
3. den Einsatz von Sprinklern,
4. Oberflächenbewässerung,
5. Raucherzeuger

Die vorgenannten Methoden haben sich als mehr oder weniger wirkungsvoll erwiesen. Beim Einsatz von Heizungen werden große Verbrennungsaggregate eingesetzt, bei denen ein Teil der Wärme über Strahlung von den Pflanzenteilen abgefangen wird. Ein weiterer Teil der Wärme wird über Konvektion transportiert. Unabhängig davon, dass diese Methode den intensiven Einsatz von Brennstoff bedingt, führt sie auch zu einer starken Umweltbelastung. Weiterhin kann diese Methode auch nur bei geringem Wind oder bei Windstille eingesetzt werden.

Mittels Windmaschinen oder Hubschrauber wird versucht, warme Luftschichten mit bodennahen kalten Luftschichten zu vermischen. In jüngerer Vergangenheit hat sich gezeigt, dass gerade bei wolkenlosen und klaren Nächten die nötige Inversionslage zur Vermischung von Luftschichten nicht vorliegt. Daher sind diese Methoden nur dann einsetzbar, wenn entsprechende Inversionslagen mit wärmeren oberen Luftschichten vorliegen.

Beim Einsatz von Sprinklern oder der Oberflächenbewässerung wird die Verdampfungsenthalpie des Wassers ausgenutzt, um eine lokale Temperaturerhöhung in Pflanzennähe zu erreichen. Dabei muss zuverlässig gesichert werden, dass das Wasser nicht auf den Trieben auffriert und dort eine unzulässig dicke Eisschicht bildet, da diese die Triebe beschädigen würde.

Häufig kommen in Weinbauanlagen Raucherzeuger zum Einsatz, mit denen eine Rauchschicht über den Obstpflanzen erzeugt wird. Diese Rauchschicht soll Wärmestrahlung, welche vom Boden kommt, absorbieren und eine übermäßige Abstrahlung verhindern. Es hat sich gezeigt, dass die Rauchschicht zwar die Strahlung im sichtbaren Wellenlängenbereich des Lichts reduziert, aber wenig Einfluss auf die Übertragung langwelliger Strahlung hat. Insofern gelangt die aufwärts gerichtete Wärmestrahlung insbesondere während der Nacht ungehindert durch die Rauchschicht hindurch. Ein Auskühlen der Obstpflanzen kann daher, insbesondere in kalten Nächten, mit dieser Methode nicht wirkungsvoll unterbunden werden. Darüber hinaus ist die starke Rauchentwicklung umweltbelastend.

Es ist auch bekannt, elektrische Heizkabel an Pflanzen zu verlegen, um die von dem Heizkabel erzeugte Wärmeenergie in Pflanzennähe abzugeben. Hierbei wird das Heizkabel sorgfältig an der Pflanze fixiert, um eine Wärmeübertragung auf die Pflanze sicherzustellen. Nur dann kann ein ausreichender Wärmeeintrag in die Pflanze garantiert werden, und die Wärme kann mit dem Saftstrom der Pflanze zu den Trieben transportiert werden. Der Einsatz solcher Heizkabel ist allerdings auf einzelne Pflanzen beschränkt, da der Aufwand zur Fixierung des Heizkabels sehr aufwendig ist und nicht mit vertretbaren Montagekosten in Obstanlagen mit einer großen Anzahl an Obstpflanzen durchgeführt werden kann. Darüber hinaus muss die Heizanlage dann, wenn die Frostperiode vorüber ist, wieder demontiert werden, wodurch neue Kosten entstehen. Hierbei ist darauf zu achten, dass die dann vorhandenen Jungtriebe nicht beschädigt werden.

Schließlich ist aus der DE 20 2017 102 872 U1 eine Spalierobstanlage der eingangs genannten Art mit einer Heizeinrichtung bekannt. Die Heizeinrichtung weist je Pflanzreihe mehrere stirnseitig aneinander gereihte Hohlprofile mit einer Längserstreckung entlang einer Längsachse und ein in den Hohlprofilen geführtes Heizkabel auf, das über die Hohlprofile an dem Befestigungsdraht befestigt ist. Bei besonders langen Pflanzreihen werden mehrere Hohlprofile hintereinander gesetzt, damit das Heizkabel leichter eingefädelt werden kann. In einem Übergangsbereich zwischen stirnseitig aneinandergrenzenden Hohlprofilen werden Verbindungsmuffen eingesetzt. Die Ausgestaltung und Montage der Verbindungsmuffen ist in dieser Druckschrift nicht näher erläutert.

Aus der nachveröffentlichten DE 10 2017 116 571 sind Verbindungsmuffen bekannt, die jeweils eine als Rohrabschnitt ausgebildete Hülse umfassen, welche über die Enden aneinandergrenzender Hohlprofile geschoben und dort mittels eines Schrumpfschlauchs befestigt ist. Damit sich der Durchmesser des Schrumpfschlauchs verringert und sich dieser auf die Hülse und die Enden der aneinandergrenzenden Hohlprofile anlegt, ist eine Wärmezufuhr mittels eines Wärmeerzeugers erforderlich. Dazu muss eine Energieversorgung (z.B. Strom oder Gas) und ein geeigneter Wärmeerzeuger, beispielsweise in Form einer Heißluftpistole oder eines Bunsenbrenners, vorhanden sein. Zudem hat sich gezeigt, dass der Schrumpfschlauch im Zusammenwirken mit der Hülse die Rohrenden der Hohlprofile so fest und starr aneinander befestigt, dass eine Relativbewegung zwischen den Hohlprofilen in Richtung der Längsachsen der Hohlprofile nicht mehr möglich ist. Eine solche Relativbewegung wäre jedoch insbesondere zur Kompensation von temperaturbedingten Längenänderungen der Hohlprofile mitunter wünschenswert.

Es ist Aufgabe der Erfindung, eine Spalierobstanlage der eingangs erwähnten Art mit einer Heizeinrichtung derart auszugestalten und weiterzubilden, dass mit vertretbarem Montage- und Energieaufwand eine wirksame Frostbekämpfung möglich ist. Insbesondere soll die Montage mehrerer stirnseitig aneinandergrenzender Hohlprofile erleichtert werden.

Diese Aufgabe wird durch eine Spalierobstanlage mit den Merkmalen des Anspruchs 1 gelöst. Insbesondere wird vorgeschlagen, dass die Heizeinrichtung je Pflanzreihe mindestens zwei stirnseitig aneinander gereihte Hohlprofile mit einer Längserstreckung entlang einer Längsachse und ein in den Hohlprofilen geführtes Heizkabel aufweist, das über die Hohlprofile an dem Befestigungsdraht befestigt ist, und dass die Heizeinrichtung ferner Verbindungshülsen zum Verbinden aneinander gereihter Hohlprofile miteinander im Bereich ihrer Stirnseiten aufweist, wobei die Verbindungshülsen
entweder jeweils an einem ersten Ende eines ersten Hohlprofils derart ausgebildet oder befestigt sind, dass sie in Längsrichtung verschiebefest bezüglich des ersten Hohlprofils sind, und die an einem zweiten Ende eines stirnseitig an das erste Ende des ersten Hohlprofils angrenzenden anderen Hohlprofils derart mit einem Schiebesitz befestigt sind, dass eine relative Verschiebbarkeit zwischen der Verbindungshülse und dem anderen Hohlprofil in Längsrichtung ermöglicht ist,
oder jeweils an einem ersten Ende eines ersten Hohlprofils und an einem zweiten Ende eines stirnseitig an das erste Ende des ersten Hohlprofils angrenzenden anderen Hohlprofils derart befestigt sind, dass sie in Längsrichtung verschiebefest bezüglich der Hohlprofile sind, wobei die Verbindungshülsen einen zwischen den stirnseitig aneinander angrenzenden Hohlprofilen wirkenden Elastizitätsbereich aufweisen, der eine relative Verschiebbarkeit der Hohlprofile relativ zueinander in Längsrichtung ermöglicht.

Die der vorliegenden Erfindung zugrundeliegende Aufgabe wird auch durch eine Heizeinrichtung mit den Merkmalen des Anspruchs 11 gelöst.

Erfindungsgemäß wird mithin das Heizkabel unter Vermittlung des Hohlprofils an dem Befestigungsdraht des Drahtrahmengerüsts festgemacht, der auch zur Befestigung der Obstpflanze dient. Dementsprechend steht die Obstpflanze bereits in Kontakt mit dem Befestigungsdraht. Das Heizkabel kann seine Wärmeenergie an das Hohlprofil übertragen. Dazu füllt das Heizkabel vorzugsweise einen möglichst großen Teil des Innenraums des Hohlprofils aus, sodass das Luftvolumen im Innenraum möglichst klein ist. Von dem Hohlprofil wird die Wärmeenergie dann durch Wärmeleitung (Konvektion) an den Befestigungsdraht und von diesem weiter in die Pflanze übertragen. Für den Fall, dass die Pflanze auch am Hohlprofil fixiert ist, kann ein direkter Wärmeeintrag in die Pflanze erfolgen. Besonders bei Weinbauanlagen hat diese Art der Beheizung Vorteile. Es ist nämlich so, dass im Herbst die Weinstöcke beschnitten werden, wobei bei Spalierobstanlagen Strecker in Form von Flachbögen, Pendelbögen oder Rundbögen an dem Befestigungsdraht und ggf. auch an anderen Rankdrähten des Drahtrahmengerüsts fixiert werden. Im Frühjahr treiben die Jungtriebe an den Streckern aus. Da die Strecker bereits an den Befestigungsdrähten fixiert sind, sind die Jungtriebe mithin auch in unmittelbarer Nähe zu dem im Hohlprofil geführten Heizkabel angeordnet. Über die gute Wärmeleitfähigkeit des Hohlprofils und des Befestigungsdrahts kann die Wärme des Heizkabels unmittelbar zum Holz des Streckers transportiert werden. Von dort kann die Wärme über den Saftstrom in der Pflanze zu den Jungtrieben transportiert werden. Weiterhin kann eine Eintragung der Wärmeleistung in unmittelbarer räumlicher Zuordnung zu dem Jungtrieb stattfinden. Auf diese Weise wird ein wirkungsvoller Schutz der Jungtriebe erreicht.

Die Verlegung des Heizkabels im Hohlprofil hat darüber hinaus den Vorteil, dass ein effektiver Schnittschutz geboten wird, der ein Durchtrennen des Heizkabels mit einem Scherenwerkzeug beim Beschneiden der Reben verhindert. Dies ist insbesondere dann zuverlässig gewährleistet, wenn das Hohlprofil aus Aluminium oder einem anderen Metallmaterial besteht. Dieses Hohlprofil ist dann äußerst widerstandsfähig gegen die Schnittkräfte, die mit üblichen Scherenwerkzeugen erzeugt werden. Das Heizkabel kann als ein sogenanntes Monokabel ausgebildet sein (vgl. bspw. DE 20 2017 102 872 U1), wo das Heizkabel lediglich einen Heizleiter aufweist, der in den Hohlprofilen geführt ist, und der Stromkreis über einen Kaltleiter geschlossen wird, der nicht Teil des Heizkabels ist und bspw. bodenseits zurück zur Stromquelle geführt ist, um den Stromkreis zu schließen. Vorteilhafterweise ist das Heizkabel jedoch so ausgebildet, dass in einem gemeinsamen Kabelverbund sowohl der Heizleiter als auch der nicht zu Heizzwecken konzipierte, zur Stromquelle zurückführende Kaltleiter geführt sind. Der Widerstand des Kaltleiters ist grundsätzlich kleiner als der Widerstand des Heizleiters. Der Heizleiter hat einen ausreichend hohen ohmschen Widerstand um die geforderte Wärmeerzeugung gewährleisten zu können. Demgegenüber hat der Kaltleiter einen sehr geringen ohmschen Widerstand für die möglichst verlustfreie Stromführung. Dadurch, dass die beiden Leiter, nämlich der Heizleiter und der Kaltleiter, in einem Kabelverbund geführt sind, kann eine gemeinsame Verlegung in dem Hohlprofil auf einfache Weise erfolgen. Bei in mehreren Pflanzreihen gestellten Spalierobstanlagen kann dann insbesondere ein Heizkabel längs einer Reihe der Spalierobstanlage verlegt werden. Am Ende der Reihe kann dann das Heizkabel einheitlich kontaktiert und an eine Stromversorgung angeschlossen werden. Bei der Verlegung des Heizkabels sind mithin keine Grabarbeiten erforderlich, was einen deutlichen Montagevorteil darstellt.

Die Fixierung des Hohlprofils am Befestigungsdraht hat darüber hinaus den Vorteil, dass die Heizeinrichtung in der Pflanzanlage verbleiben kann. Sie muss insbesondere nicht demontiert werden, wenn die Frostperiode vorüber ist. Bevorzugt ist das Hohlprofil längs des Befestigungsdrahts an einer Stelle der Pflanze angeordnet, die auch beim Einsatz beispielsweise maschineller Erntemaschinen nicht übermäßig beansprucht wird, sodass eine Beschädigung verhindert ist. Dementsprechend muss das Hohlprofil nicht nach Abschluss der Frostperiode demontiert werden, wodurch Montagekosten gespart werden. Es kann dann über lange Jahre in der Obstanlage verbleiben.

Durch die Verwendung der Verbindungshülsen zum Verbinden aneinander gereihter Hohlprofile miteinander im Bereich ihrer Stirnseiten ist das Verlegen der Hohlprofile und damit die Installation der Heizeinrichtungen besonders einfach und sicher. Ein Innendurchmesser der Verbindungshülsen ist an einen Außendurchmesser der Hohlprofile angepasst, so dass sie über ein Hohlprofil geschoben und ggf. daran befestigt werden können. Die Verbindungshülsen bestehen vorzugsweise aus Aluminium, einer Aluminiumlegierung oder einem anderen Metallmaterial. Selbstverständlich wäre es auch denkbar, dass die Hülsen aus einem robusten Kunststoffmaterial bestehen. Die Verbindungshülsen können separat von den Hohlprofilen oder integral und einstückig mit den Hohlprofilen ausgebildet sein. Bei einstückig mit den Hohlprofilen ausgebildeten Verbindungshülsen sind diese jeweils an einem Ende der Hohlprofile ausgebildet, und ein stirnseitig angrenzendes Hohlprofil wird mit seinem anderen Ende in die Verbindungshülse eingeführt und ist darin befestigt. Bei separat ausgebildeten Verbindungshülsen werden ein erstes Hohlprofil mit seinem ersten Ende und ein stirnseitig angrenzendes anderes Hohlprofil mit seinem zweiten Ende in die Verbindungshülse eingeführt und ist darin befestigt. Die Befestigung der Verbindungshülsen auf den Enden der Hohlprofile erfolgt dabei direkt und unmittelbar, ohne dass es zusätzlicher Verbindungselemente, bspw. in Form eines Schrumpfschlauches, der sich über die Endbereiche aneinandergrenzender Hohlprofile und die Verbindungshülsen erstreckt, bedarf.

Für den Fall, dass sie separat von den Hohlprofilen ausgebildet sind, sind sie jeweils an einem ersten Ende eines ersten Hohlprofils derart befestigt, dass sie in Längsrichtung verschiebefest bezüglich des ersten Hohlprofils sind. Dies kann bspw. dadurch erreicht werden, dass die Verbindungshülsen mittels Reibschluss, Formschluss oder Stoffschluss an dem ersten Ende des ersten Hohlprofils befestigt sind.

Eine Befestigung mittels Reibschluss umfasst eine Presspassung zwischen der Innenfläche der Verbindungshülse und der Außenfläche des ersten Hohlprofils im Bereich seines ersten Endes. Bei einer Presspassung hat das Material der Verbindungshülse vorzugsweise ein kleineres Elastizitätsmodul als das Material der Hohlprofile. Alternativ kann die Presspassung auch als eine Übermaßpassung ausgebildet sein, wobei ein Innendurchmesser der Hülse etwas kleiner ist als ein Außendurchmesser der Hohlprofile gewählt ist.

Eine Befestigung mittels Stoffschluss umfasst bspw. eine Befestigung der Verbindungshülsen mittels eines Klebstoff, durch Löten oder Schweißen. Der Klebstoff ist vorzugsweise ein Schmelz- oder Heißkleber. Auf diese Weise wird eine hochfeste Verbindung zwischen der Verbindungshülse und dem angeschlossenen Hohlprofil erreicht. Der Klebstoff kann aus einem Polymerwerkstoff bestehen. Dabei lassen sich als Basispolymere vorzugsweise folgende Werkstoffe einsetzen: Polyamide, Polyethylen, amorphe Polyalphaolefine, EVAC (Ethylenvinylacetat-Copolymere). Diese Basispolymere sind ausreichend temperaturbeständig für die gewählte Anwendung. Als Harz können den vorgenannten Basispolymeren folgende Werkstoffe zugesetzt sein: Kolophonium, Terpene, Kohlenwasserstoffharze. Weiterhin können Stabilisatoren in Form von Antioxidantien zugesetzt sein, beispielsweise Phenole oder Peroxidzersetzer. Auch die Verwendung von UVbeständigen Lichtschutzmitteln erweist sich für den Einsatz in Obstanlagen als vorteilhaft. Auch lassen sich natürliche oder synthetische Wachse einsetzen.

Eine Befestigung der Verbindungshülsen mittels Formschluss umfasst bspw. eine Befestigung mittels einer Rast- oder Schnappverbindung oder mittels eines Gewindes. Entscheidend ist, dass eine Verbindungshülse derart an dem ersten Ende eines ersten Hohlprofils befestigt ist, dass eine Relativbewegung zwischen Verbindungshülse und erstem Hohlprofil parallel zur Längsachse unterbunden ist. Dies kann beispielsweise auch dadurch erreicht werden, dass die Verbindungshülsen einstückig mit den Hohlprofilen ausgebildet sind. Dabei ist es denkbar, dass die Verbindungshülsen durch einen endseitig aufgeweiteten Abschnitt der Hohlprofile gebildet sind. Die Aufweitung eines Endabschnitts der Hohlprofile kann beispielsweise im Rahmen der Fertigung der Hohlprofile erfolgen.

Ferner sind die Hohlprofile an einem zweiten Ende eines stirnseitig an das erste Ende des ersten Hohlprofils angrenzenden anderen Hohlprofils derart mit einem Schiebesitz befestigt, dass eine relative Verschiebbarkeit zwischen der Verbindungshülse und dem anderen Hohlprofil in Längsrichtung ermöglicht ist. Durch diesen Schiebesitz kann ein Ausgleich von Längenänderungen der Hohlprofile, beispielsweise aufgrund von Temperaturschwankungen, erzielt werden, indem die miteinander verbundenen Hohlprofile relativ zueinander verschiebbar von der Verbindungshülse gehalten und aneinander befestigt sind. Dadurch ist gewährleistet, dass an den Hohlprofilen befestigte Jungtriebe aufgrund einer Längenänderung der Hohlprofile nicht beschädigt werden. Zudem können mechanische Spannungen in der Heizeinrichtung, insbesondere in den Hohlprofilen, vermieden werden. Es ist denkbar, dass für die Heizeinrichtung vorgefertigte rohrförmige Hohlprofile mit bereits endseitig befestigten Verbindungshülsen verwendet werden.

Besonders bevorzugt sind die Hohlprofile aus Metall, insbesondere Aluminium oder einer Aluminiumlegierung, gefertigt, das an seiner nach außen gerichteten Oberfläche unbehandelt, insbesondere nicht beschichtet ist. Die Außenfläche hat somit eine relativ raue Oberfläche, über die ein besonders guter Wärmeübergang auf den Befestigungsdraht bzw. die Obstpflanze möglich ist. Auf diese Weise kann die Wärmeabgabe mittels Konvektion vergrößert und die Wärmeabstrahlung, die über den gesamten Umfang des Hohlprofils erfolgt und deshalb einen relativ schlechten Wirkungsgrad hat, verringert werden. Dies steigert die Gesamteffizienz der Heizeinrichtung, da die pro aufgenommener elektrischer Leistung an die Obstpflanzen abgegebene Wärmeleistung besonders hoch ist. Rohrförmige Aluminium-Hohlprofile werden bspw. durch ein Strangpressverfahren und unter Umständen einem oder mehreren anschließenden Ziehvorgängen hergestellt. Eine Oberflächenbehandlung der Außenflächen der Hohlprofile, bspw. durch Abschleifen, Glätten, Lackieren oder sonstiges Beschichten, im Anschluss an deren Herstellung erfolgt bevorzugt nicht.

Vorzugsweise ist vorgesehen, dass der Heizleiter mit dem Kaltleiter im Bereich eines Endes des Heizkabels elektrisch leitend verbunden ist, und dass das andere Ende des Heizleiters und des Kaltleiters zu einer elektrischen Anschlussdose geführt und dort kontaktiert sind, wobei die Anschlussdose vorzugsweise an einem Tragpfosten des Drahtrahmengerüsts befestigt ist. Auf diese Weise kann alleine mit der Verwendung des Heizkabels ein geschlossener Stromkreis gebildet werden, sodass die Verlegung des Heizkabels einfach gelingt. Am Ende des Heizkabels kann die Kontaktierung des Heizkabels an der Anschlussdose erfolgen. Der Obstbauer kann in der frostkritischen Zeit dann beispielsweise einen Kabelbaum verlegen und diesen über geeignete Stecker an die Anschlussdose anschließen. In einer Pflanzanlage können auch mehrere Anschlussdosen vorgesehen sein. Über den Kabelbaum kann eine Stromversorgung angeschlossen werden. Sobald die frostkritische Zeit vorbei ist, kann der Kabelbaum wieder demontiert werden. Hierbei ist es insbesondere von Vorteil, wenn vorgesehen ist, dass die Anschlussdose eine Anschlussklemme aus witterungs- und temperaturbeständigem Material, insbesondere eine keramische Anschlussklemme, aufweist, an der sowohl der Heizleiter als auch der Kaltleiter unmittelbar kontaktiert sind. Der Heizleiter kann mithin unmittelbar an die Anschlussklemme angeschlossen werden, so dass keine aufwändige Überleitung des Heizleiters in ein Kaltanschluss-Ende erfolgen muss. Hierdurch wird ein besonders günstiges Heizkabel verwendbar.

Es kann vorgesehen sein, dass der oder die Tragpfosten einen hakenförmigen Drahthalter aufweist, an dem der gespannte Befestigungsdraht ein- und aushängbar ist, und dass das Hohlprofil um den Befestigungsdraht gewickelt ist. Solche Tragpfosten sind insbesondere bei Weinbauanlagen typisch. Für die Installation der Heizeinrichtung kann das Hohlprofil um den Befestigungsdraht gedrillt werden. Im Bereich des Tragpfostens kann der Befestigungsdraht ausgehangen und das Hohlprofil an dem Tragpfosten vorbei weiter um den Befestigungsdraht gewickelt werden. Anschließend kann der Befestigungsdraht wieder an dem hakenförmigen Drahthalter angehängt werden. Auf diese Weise wird ohne zusätzliche Befestigungselemente eine innige Verbindung zwischen dem Befestigungsdraht und dem Hohlprofil erreicht, wobei sich die beiden Bauteile gegeneinander verspannen.

Eine Abwicklung des Hohlprofils gegenüber dem Befestigungsdraht ist einfach dadurch verhindert, dass der Befestigungsdraht an dem hakenförmigen Drahthalter eingehängt ist. Die Installation der Heizeinrichtungen ist damit besonders einfach und sicher.

Erfindungsgemäß kann es auch vorgesehen sein, dass der Heizleiter und der Kaltleiter in Kabel-Längsrichtung miteinander verdrillt sind. Über diese Verdrillung erfolgt keine gestreckte Ausrichtung des Heizleiters bzw. des Kaltleiters in Längsrichtung des Heizkabels. Vielmehr verlaufen diese Kabel wendelförmig. Auf diese Weise besitzt das Heizkabel die Möglichkeit der Längendehnung bei thermischen Schwankungen. Mit dieser einfachen Maßnahme wird eine Beschädigung des Heizkabels bei üblichen Temperaturschwankungen sicher verhindert.

Bei Spalierobstanlagen werden üblicherweise lange Pflanzenreihen von Obstpflanzen gebildet, wobei die einzelnen Pflanzen einer Reihe über ein Drahtrahmengerüst miteinander verbunden sind. Dementsprechend kann sich das Heizkabel über eine erhebliche Länge längs der Pflanzreihe erstrecken. Bei der Verlegung des Heizkabels muss es in die Hohlprofile eingezogen werden. Um nun eine Beschädigung beim Einziehen des Heizkabels zu verhindern, kann vorgesehen sein, dass der Heizleiter, der Kaltleiter und ein Beilauf, vorzugsweise in Fadenform oder Faserform, aus zugfestem Material, beispielsweise Glasseide oder Metall, miteinander in Längsrichtung des Kabels verdrillt sind. Über den Beilauf können die innerhalb des Heizkabels wirkenden Zugkräfte aufgenommen werden.

Ein Heizkabel, welches für die Installation in Obstanlagen besonders geeignet und dabei gleichzeitig auch kostengünstig ist, ist dergestalt, dass der jeweils von einer Isolierhülle umgebene Heizleiter und der Kaltleiter gemeinsam von einer Schutzfolie umwickelt sind, und dass um die Schutzfolie eine elektrisch leitende Erdung herumgeführt ist, die dann von einer weiteren Folie umwickelt ist. Um die weitere Folie kann abschließend ein Isoliermantel herumgelegt sein.

Es ist besonders bevorzugt, wenn die Verbindungshülsen Kunststoffklemmmuffen umfassen, deren Innenflächen zumindest auf einer Seite der Kunststoffklemmmuffen von einer Stirnseite aus zu einer Mitte hin verjüngend, insbesondere konisch oder stufig, aufeinander zulaufen, so dass zumindest eines der Hohlprofile im Bereich der verjüngend zulaufenden Innenfläche mittels Reibschluss gehalten ist. Von der Seite der Kunststoffklemmmuffen mit den verjüngend zulaufenden Innenflächen aus kann ein Hohlprofil eingeführt werden. Mit zunehmendem Einführen des Hohlprofils in die Kunststoffklemmmuffe wird das Material der Klemmmuffe zunehmend nach außen gedrückt und das Hohlprofil sicher darin gehalten. Über die Neigung der verjüngend zulaufenden Innenflächen kann eingestellt werden, ob das Hohlprofil längsverschiebbar oder in Längsrichtung fest relativ zu der Verbindungshülse gehalten ist. Für eine Längsverschiebbarkeit ist die Neigung der verjüngend zulaufenden Innenflächen in der Regel weniger steil gewählt. Ist die Neigung der verjüngend zulaufenden Innenflächen ausreichend steil gewählt, ist das darin eingeführte Hohlprofil fest in der Verbindungshülse gehalten, so dass eine Längsverschiebbarkeit des Hohlprofils relativ zu der Verbindungshülse aufgrund von Temperaturänderungen und der daraus resultierenden Längenänderung des Hohlprofils unterbunden ist.

Die Begriffe in Längsrichtung verschiebbar bzw. fest bedeuten, dass die Hohlprofile aufgrund der Kräfte, die infolge von Längenänderung der Hohlprofile bspw. aufgrund von Temperaturschwanken wirken, relativ zu der Verbindungshülse, an der die Hohlprofile befestigt sind, verschiebbar oder fest befestigt sind. Wenn bspw. kleinerer Kräfte zwischen den Hohlprofilen und der Verbindungshülse wirken, ist es denkbar, dass sich selbst das bezüglich der Verbindungshülse längsverschiebbar befestigte Hohlprofil nicht relativ zu der Verbindungshülse bewegt. Anderseits ist es denkbar, dass wenn größere Kräfte zwischen den Hohlprofilen und der Verbindungshülse wirken, sich selbst das bezüglich der Verbindungshülse nicht-längsverschiebbar befestigte Hohlprofil relativ zu der Verbindungshülse bewegt. Durch das Aufbringen größerer Kräfte wäre es möglich, das in die Verbindungshülse fest und nicht-längsverschiebbar eingesetzte Hohlprofil relativ zu der Hülse in Längsrichtung zu bewegen und so das Hohlprofil bspw. wieder aus der Verbindungshülse herauszuziehen.

Gemäß einer alternativen Ausführungsform können die Verbindungshülsen auch jeweils an einem ersten Ende eines ersten Hohlprofils und an einem zweiten Ende eines stirnseitig an das erste Ende des ersten Hohlprofils angrenzenden anderen Hohlprofils derart befestigt sein, dass sie in Längsrichtung verschiebefest bezüglich der Hohlprofile sind, wobei die Verbindungshülsen einen zwischen den stirnseitig aneinander angrenzenden Hohlprofilen wirkenden Elastizitätsbereich aufweisen, der eine relative Verschiebbarkeit der Hohlprofile relativ zueinander in Längsrichtung ermöglicht. In diesem Sinne wäre es denkbar, dass die Verbindungshülsen einen Schrumpfschlauch umfassen, der im Bereich der Stoßstellen zweier stirnseitig aneinander anliegender Hohlprofile unmittelbar auf die Außenflächen der Hohlprofile aufgebracht und dort durch Wärmezufuhr aufgeschrumpft wird. Es wird insbesondere vorgeschlagen, dass die Verbindungshülsen jeweils einen Schrumpfschlauch aus einem Polyolefin, insbesondere Polyethylen, umfassen, dessen Innendurchmesser sich durch Wärmezufuhr verkleinert, wobei der Schrumpfschlauch jeweils im Bereich der Stirnseiten des ersten Hohlprofils und des anderen Hohlprofils direkt auf den Außenflächen der ersten und zweiten Rohrenden der Hohlprofile angeordnet und daran befestigt ist. Aufgrund der Elastizität des Materials des Schrumpfschlauchs hat eine derart ausgebildete Verbindungshülse im Bereich der Stoßstelle zwischen aneinandergrenzenden Hohlprofilen einen Elastizitätsbereich, so dass aneinandergrenzende Hohlprofile in Längsrichtung relativ zueinander verschiebbar sind, um Längenänderungen der Hohlprofile, bspw. aufgrund von Temperaturschwankungen kompensieren zu können. Auf diese Weise ist eine schnelle, sichere und zuverlässige Verbindung zwischen aneinandergrenzenden Hohlprofilen ohne zusätzliche Verbindungselemente (z.B. zusätzliche Hülsen) ermöglicht.

Die Aufgabe der Erfindung wird weiterhin auch gelöst mit einer Heizeinrichtungen für eine Spalierobstanlage, insbesondere eine Weinbauanlage, mit in Reihe gestellten Obstpflanzen, wobei die Heizeinrichtung ein Heizkabel aufweist, das in wenigstens zwei in Längsrichtung aneinander gereihten Hohlprofilen geführt ist. Die zwei Hohlprofile stehen sich im Bereich eines ihrer längsseitigen Rohrenden in einem Stoßbereich gegenüber, wobei in diesem Stoßbereich eine Verbindungshülse über die beiden Hohlprofile geschoben ist, und wobei die beiden Hohlprofile mit der Hülse verbunden sind. Die Verbindung zu einem ersten Hohlprofil erfolgt dabei derart, dass eine relative Verschiebbarkeit zwischen Verbindungshülse und erstem Hohlprofil in Längsrichtung unterbunden ist, und die Verbindung zu einem anderen Hohlprofil erfolgt dabei derart, dass eine relative Verschiebbarkeit zwischen Verbindungshülse und anderem Hohlprofil möglich ist. Auf diese Weise kann eine große Anzahl von Hohlprofilen einfach und sicher miteinander verbunden werden. Zudem können Längenänderungen der Hohlprofile, bspw. aufgrund von Temperaturschwankungen, kompensiert werden. Unabhängig von der Temperatur bleibt die Gesamtlänge der Heizeinrichtung entlang einer Pflanzreihe weitgehend konstant, da eine Längsverschiebbarkeit aneinandergrenzender Hohlprofile relativ zueinander ermöglicht ist. Wenn sich die Länge der einzelnen Hohlprofile verringert, schieben sie sich im Bereich des Schiebesitzes einfach etwas aus der Verbindungshülse heraus.

Die Erfindung wird im Folgenden anhand von in den Zeichnungen dargestellten Ausführungsbeispielen näher erläutert. Es zeigen:
- Figur 1: in schematischer Seitenansicht eine Pflanzenreihe einer erfindungsgemäßen Spalierobstanlage;
- Figur 2: in perspektivischer Ansicht ein Heizkabel einer erfindungsgemäßen Heizeinrichtung;
- Figur 3: einen Verbindungs- oder Stoßbereich von zwei stirnseitig aneinander angrenzenden Hohlprofilen gemäß einer ersten Ausführungsform, teilweise im Schnitt;
- Figur 4: einen Verbindungs- oder Stoßbereich von zwei stirnseitig aneinander angrenzenden Hohlprofilen gemäß einer zweiten Ausführungsform, teilweise im Schnitt;
- Figur 5: einen Verbindungs- oder Stoßbereich von zwei stirnseitig aneinander angrenzenden Hohlprofilen gemäß einer dritten Ausführungsform, teilweise im Schnitt; und
- Figur 6: einen Verbindungs- oder Stoßbereich von zwei stirnseitig aneinander angrenzenden Hohlprofilen gemäß einer weiteren Ausführungsform, teilweise im Schnitt.

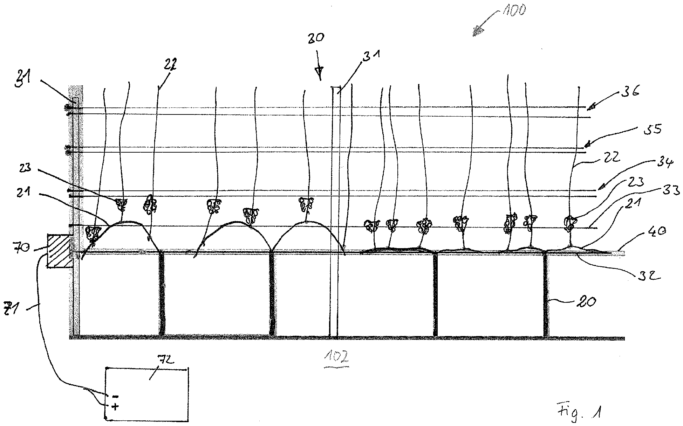

Figur 1 zeigt eine Seitenansicht einer Pflanzreihe 100 einer erfindungsgemäßen Spalierobstanlage, wie sie im Weinbau zum Einsatz kommt. Es handelt sich hierbei um eine Erziehungsanlage für Obstpflanzen 20, insbesondere Weinstöcke. Bei dieser Spalierobstanlage sind in einer Pflanzreihe 100 mehrere Tragpfosten 31 zueinander beabstandet entlang des Geländeprofils aufgestellt. Die Spalierobstanlage umfasst vorzugsweise mehrere nebeneinander und parallel zueinander verlaufende Pflanzreihen 100. Die Tragpfosten 31 sind unter Bildung eines Drahtrahmengerüsts 30 mittels Drähten miteinander verbunden. Dabei kommt ein Befestigungsdraht 32 zum Einsatz, der über die Tragpfosten 31 hinweg geführt ist. Oberhalb und in einem Abstand zu dem Befestigungsdraht 32 verläuft ein Biegedraht 33. Oberhalb des Biegedrahts 33 sind hier drei Drahtpaare 34, 35, 36 angeordnet, die beweglich sind und entlang einer Vertikalerstreckung der Tragpfosten 31 begrenzt verstellt werden können. Die Obstpflanzen 20 erstrecken sich mit ihrem Stamm vom Boden 102 ausgehend nach oben bis in den Bereich des Befestigungsdrahts 32. Dem Boden 102 abgewandt bildet der Stamm Strecker 21, die an dem Befestigungsdraht 32 befestigt werden können.

In der Zeichnung sind exemplarisch zwei typische Erziehungsarten für Weinstöcke 20 gezeigt. Bei den rechten beiden Weinstöcken 20 ist eine Horizontalerziehung dargestellt, wobei die Strecker 21 längs des Befestigungsdrahts 32 geführt und daran befestigt sind. Die linken beiden Weinstöcke 20 stellen eine sogenannte Pendelbogen-Erziehung dar. Dabei sind die Strecker 21 ausgehend von dem Stamm zu dem Biegedraht 33 geführt und dort befestigt. Von dem Biegedraht 33 werden die Strecker 21 wieder zurück in Richtung auf den Befestigungsdraht 32 gebogen und dort befestigt. Von den Streckern 21 gehen Triebe 22 ab, an denen zum Teil Fruchtstände in Form von Weintrauben 23 ausgebildet sind. Diese Triebe 22 können dann an dem Biegedraht 33 und/oder den Drahtpaaren 34 bis 36 befestigt werden.

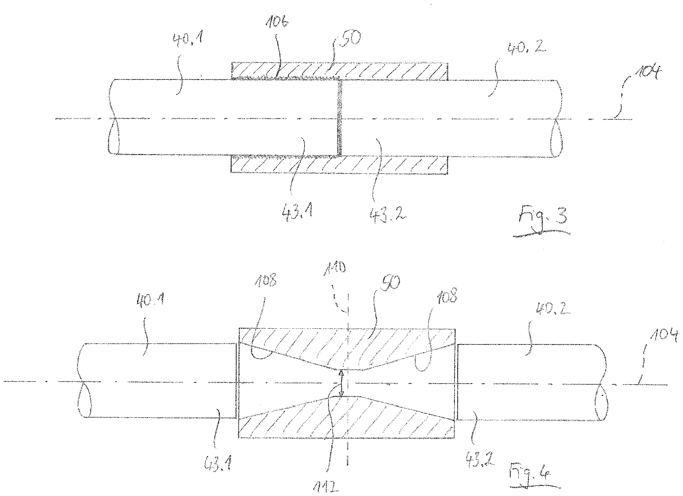

Im vorliegenden Ausführungsbeispiel ist längs des Befestigungsdrahts 32 ein Heizkabel 10 einer erfindungsgemäßen Heizeinrichtung verlegt. Um das Kabel 10 vor Beschädigung, bspw. durch ein Schneidwerkzeug beim Beschnitt der Weinstöcke 20 oder durch einen entlang der Pflanzreihen 100 fahrende maschinelle Erntemaschine (sog. Vollernter), zu schützen, sind die Heizkabel 10 in Hohlprofilen 40 verlegt. Die Hohlprofils 40 sind an dem Befestigungsdraht 32 fixiert, bspw. mittels Bindedräten oder Kabelbinder aus Kunststoff. Um das Verlegen der Hohlprofile 40 mit dem darin verlaufenden Heizkabel 10 zu erleichtern, sind entlang einer Pflanzreihe 100 jeweils mehrere Hohlprofile 40 stirnseitig aneinandergrenzend verlegt. Zum Verbinden von aneinandergrenzenden Hohlprofilen 40 im Bereich ihrer Stoßstellen sind erfindungsgemäß besondere Verbindungshülsen vorgesehen, die nachfolgend noch unter Bezugnahme auf Figuren 3 bis 6 im Detail beschrieben werden.

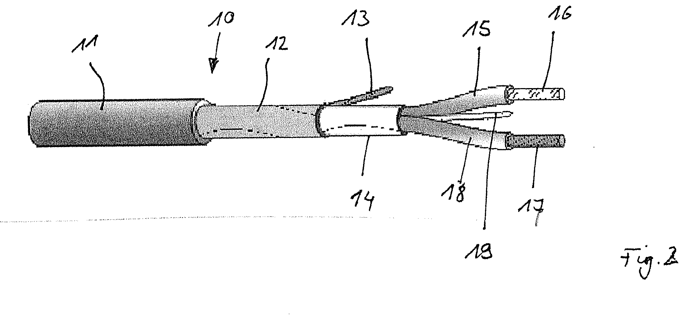

Der Befestigungsdraht 32 ist an hakenförmigen Drahthaltern der Tragpfosten 31 eingehängt. Die Hohlprofile 40 werden um den Befestigungsdraht 32 gedrillt herum verlegt, sodass sich eine innige Zuordnung der Hohlprofile 40 zu dem Befestigungsdraht 32 ergibt. Bedarfsweise können auch zusätzlich Bindedrähte oder Kabelbinder verwendet werden, mit denen die Hohlprofile 40 am Befestigungsdraht 32 fixiert sind. Innerhalb des Hohlprofils 40 ist das Heizkabel 10 geführt, das in Figur 2 gezeigt ist.

Das Heizkabel 10 weist einen Heizleiter 16 auf. Dieser ist so konzipiert, dass er bei einer Spannung von 220 V einen so großen Widerstand aufweist, dass sich eine elektrische Leistungsaufnahme im Bereich zwischen 5 bis 25 W/Meter ergibt. Hierdurch kann eine Heizleistung erzielt werden, durch die sich übliche Obstanlagen ausreichend frostsicher schützen lassen. Der Heizleiter 16 ist von einer Isolierhülle 15 umgeben. Weiterhin ist ein Kaltleiter 17 vorgesehen, der beispielsweise in Form einer Kupferlitze mit einem sehr geringen Widerstand ausgebildet sein kann. Beispielsweise kann ein Widerstand im Bereich von 0,035 Ohm/Meter oder weniger vorgesehen sein. Auch der Kaltleiter 17 ist von einer Isolierhülle 18 umgeben. Der Heizleiter 16 und der Kaltleiter 17 sind mit einem Beilauf 19 verdrillt, also in Längserstreckung des Heizkabels 10 wendelförmig umeinander gewickelt. Der Beilauf 19 kann aus Glasseide bestehen. Um den Heizleiter 16, den Kaltleiter 17 und den Beilauf 19 herum ist ein Schutz aus Polyester angeordnet. Dieser Schutz kann beispielsweise von einer Schutzfolie 14 gebildet sein, die um den Heizleiter 16, den Kaltleiter 17 und den Beilauf 17 herum gewickelt ist. Zwischen einer Aluminiumkaschierten Folie 12 und der Schutzfolie 14 ist eine Erdung 13 geführt. Diese kann beispielsweise von einem verzinnten Kupferdraht oder einem verzinnten Kupferdrahtgeflecht gebildet sein. Das Heizkabel 10 ist mit einem Außenmantel 11 aus Polyethylen abgeschlossen, der auf die Folie 12 aufextrudiert ist.

Wie Figur 1 zeigt, ist das Heizkabel 10 in den Hohlprofilen 40 geführt. An einem Ende ist das Heizkabel 10 an eine Anschlussdose 70 angeschlossen. Die Anschlussdose 70 weist dabei eine Anschlussklemme aus Keramikmaterial auf, die temperatur- und witterungsbeständig ist. Auf diese Weise kann das Heizkabel 10 mit dem Heizleiter 16 und dem Kaltleiter 17 unmittelbar an die Anschlussklemme der Anschlussdose 70 angeschlossen werden. Die Anschlussdose 70 ist vorzugsweise an dem letzten Tragpfosten 31 des Drahtrahmengerüsts 30 angebaut. Hier kann dann mittels eines Verbindungskabels 71 und eines an dem Verbindungskabel 71 angebrachten, auf die Anschlussdose 70 abgestimmten Steckers ein Anschluss an eine Stromversorgung 72 erfolgen. Der Anschlussdose 70 abgewandt ist das Heizkabel 10 endseitig so ausgestaltet, dass der Heizleiter 16 mit dem Kaltleiter 17 verbunden ist, um den Stromkreis zu schließen. Die Anschlussdose 70 oder die Stromversorgung 72 können Mittel zum Einstellen der Heizleistung der Heizeinrichtung aufweisen. Über diese Mittel kann bspw. die elektrische Leistungsaufnahme des Heizkabels 10 eingestellt werden, woraus dann eine bestimmte Heizleistung resultiert. Ferner kann die Anschlussdose 70 oder die Stromversorgung 72 eine Regeleinrichtung aufweisen, um die Heizeinrichtung auf einen vorgebbaren Wert der Heizleistung zu regeln. Zu diesem Zweck können Mittel zum Einstellen der Heizleistung auf einen vorgebbaren Sollwert sowie Temperartursensoren entlang der Hohlprofile 40 vorgesehen sein, die den Istwert der Temperatur der Hohlprofile 40 bzw. an ihrer Außenfläche oder in einem Abstand dazu erfassen. Die Regeleinrichtung regelt dann die Stromzufuhr in das Heizkabel 10 derart, dass der Istwert der Temperatur dem eingestellten Sollwert entspricht.

Sobald die Stromversorgung 72 an das Heizkabel 40 angeschlossen und eingeschaltet ist, erwärmt sich der Heizleiter 16. Die Wärmeenergie des Heizleiters 16 wird auf die Hohlprofile 40 übertragen. Die Wärmeenergie wird von den Hohlprofilen 40 dann in den Befestigungsdraht 32 eingebracht. Bei der in der Figur 1 dargestellten rechten Erziehungsmethode wird die Wärmeenergie mittelbar über den Befestigungsdraht 32 bzw. unmittelbar über die Hohlprofile 40 in die Strecker 21 eingebracht, sodass diese wirkungsvoll vor Frost geschützt sind. Bei der in Figur 1 links gezeigten Pendelbogenerziehung wird das Hohlprofil 40 längs der Pendelbögen (Strecker 21) gebogen, sodass auch hier eine unmittelbare Wärmeeinbringung in die Strecker 21 erfolgen kann. Wenn das Hohlprofil 40 aus Aluminium oder einer Aluminiumlegierung gebildet ist, kann ein einfaches Anformen an die Strecker 21 gelingen.

Für eine besonders gute Wärmeübertragung ist es empfehlenswert, wenn die Hohlprofile 40 aus einem unbehandelten Aluminiummaterial bestehen. Durch die raue Außenfläche des unbehandelten Aluminiums wird eine Wärmeübertragung mittels Konvektion gefördert. Zudem ist es empfehlenswert, dass zwischen dem Heizkabel 10 und der Innenfläche der Hohlprofile 40 möglichst wenig Luft eingeschlossen ist. Der Innendurchmesser der Hohlprofile 40 ist also so gewählt, dass das Heizkabel 10 einerseits problemlos eingeführt und hindurchgeführt werden kann und andererseits aber auch eine äußere Mantelfläche des Heizkabels 40 möglichst nah an der Innenfläche der Hohlprofile 40 anliegt. In einem bevorzugten Beispiel hat das Heizkabel 40 einen Außendurchmesser von 7,2 mm und haben die Hohlprofile 40 einen Innendurchmesser von 8,0 mm. Durch die beschriebene Optimierung der erfindungsgemäßen Heizeinrichtung kann deren Wirkungsgrad deutlich gesteigert werden, sodass sie eine elektrische Leistungsaufnahme von weniger als 10 W/Meter aufweist und trotzdem einen wirksamen Frostschutz für die Obstpflanzen 20 bietet.

Statt einer Regeleinrichtung in der Anschlussdose 70 oder der Stromversorgung 72 lassen sich im Rahmen der Erfindung auch sogenannte selbstregulierende Heizkabel einsetzen. Selbstregulierende Heizkabel weisen zwei parallelen Versorgungsleiter, nämlich einen Heizleiter und einen rückführenden Kaltleiter auf. Diese Versorgungsleiter sind in ein vernetztes und mit Kohlenstoffteilchen dotiertes Kunststoff-Heizelement eingebettet. Steigt die Temperatur des Kabels im Betrieb, so dehnt sich der Kunststoff durch molekulare Expansion aus und die Abstände zwischen den Kohlenstoffteilchen vergrößern sich. Der Widerstand des leitfähigen Kunststoffs steigt, und die elektrische Leistung sinkt, was zu einer Abkühlung des Kabels führt. Bei Abkühlung kehrt sich dieser Prozess wieder um und die elektrische Leistung steigt. Solche selbstregulierenden Heizkabel müssen nicht in fertig konvektionierter Größe gefertigt werden. Vielmehr lassen Sie sich beliebig ablängen, wobei stets eine gleichbleibende Wärmeleistung pro Meter abgegeben wird.

Jeweils zwei der längs des Befestigungsdrahts 32 verlegten Hohlprofile 40 sind in einem Verbindungs- oder Stoßbereich an ihren längsseitigen Rohrenden miteinander verbunden. Die Figuren 3 bis 6 zeigen verschiedene Ausführungsbeispiele für eine Ausgestaltung der Verbindung- oder Stoßbereich. In Figur 3 ist zur Verbindung der Hohlprofile 40 eine Verbindungshülse 50 verwendet. Die Hülse 50 kann als Rohrabschnitt aus Kunststoff oder Metall, insbesondere aus Aluminium oder einer Aluminiumlegierung, ausgebildet sein. Dabei ist der Innendurchmesser der Hülse 50 auf den Außendurchmesser der Hohlprofile 40 abgestimmt. Auf diese Weise kann die Hülse 50 über die Rohrenden 43 geschoben werden.

Die Verbindungshülse 50 ist an einem ersten Ende 43.1 eines ersten Hohlprofils 40.1 derart befestigt, dass sie in Längsrichtung entlang einer Längsachse 104 verschiebefest bezüglich des ersten Hohlprofils 40.1 ist. Dies kann beispielsweise dadurch erreicht werden, dass zwischen der Innenfläche der Verbindungshülse 50 und der Außenfläche des ersten Hohlprofils 40.1 im Bereich des ersten Endes 43.1 eine Presspassung ausgebildet ist, sodass die Hülse 50 mittels Reibschluss auf dem ersten Hohlprofil 40.1 verschiebefest gehalten ist. Ferner wäre auch eine Befestigung der Hülse 50 auf dem ersten Hohlprofil 40.1 mittels Formschlusses denkbar. In Figur 3 ist eine Befestigung der Hülse 50 auf dem ersten Hohlprofil 40.1 mittels Stoffschlusses dargestellt, wobei zwischen der Innenfläche der Verbindungshülse 50 und der Außenfläche des ersten Hohlprofils 40.1 im Bereich des ersten Endes 43.1 ein Klebstoff 106 eingebracht ist. Alternativ wäre es auch denkbar, die stoffschlüssige Verbindung zwischen der Verbindungshülse 50 und dem ersten Hohlprofil 40.1 durch Schweißen oder Löten herzustellen.

Des Weiteren ist die Verbindungshülse 50 an einem zweiten Ende 43.2 des stirnseitig an das ersten Ende 43.1 des ersten Hohlprofils 40.1 angrenzenden anderen Hohlprofils 40.2 derart mittels eines Schiebesitzes befestigt, dass eine relative Verschiebbarkeit zwischen der Verbindungshülse 50 und dem anderen Hohlprofil 40.2 in Längsrichtung entlang der Längsachse 104 ermöglicht ist. Der Schiebesitz ist derart ausgestaltet, dass das andere Hohlprofil 40.2 im normalen Betrieb der Heizeinrichtung (wenn keine besonders großen Zugkräfte zwischen der Hülse 50 und dem Hohlprofil 40.2 wirken) zwar in der Hülse 50 sicher gehalten ist, jedoch bei einer Längenänderung der Hohlprofile 40, beispielsweise aufgrund von Temperaturschwankungen, eine relative Verschiebbarkeit des anderen Hohlprofils 40.2 in der Hülse 50 möglich ist. Auf diese Weise werden mechanische Spannungen in den Hohlprofilen 40 sowie ein Abscheren junger Triebe 22 von den Streckern 21 durch sich in Längsrichtung bewegende Hohlprofile 40 verhindert. Zur Verbesserung der Verschiebbarkeit der Hülse 50 bezüglich des anderen Hohlprofils 40.2 kann zwischen der Innenfläche der Hülse 50 und der Außenfläche des anderen Hohlprofils 40.2 im Bereich seines zweiten Endes 43.2 ein Gleitmittel (zum Beispiel Fett oder Vaseline®) eingebracht sein. Das Gleitmittel kann auch dazu dienen, das Eindringen von Feuchtigkeit und Schmutz in das Innere der Hohlprofile 40 zu verhindern.

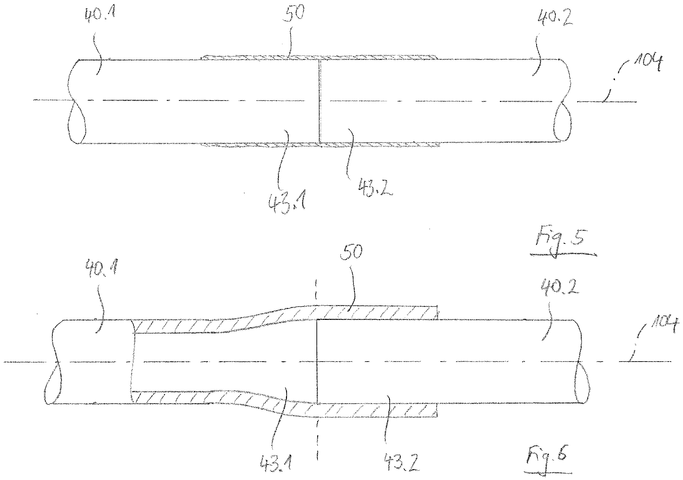

In einer alternativen Ausführungsform, die in Figur 6 gezeigt ist, ist die Verbindungshülse 50 als integraler Teil einstückig mit dem ersten Hohlprofil 40.1 ausgebildet, indem das erste Hohlprofil 40.1 endseitig, d. h. im Bereich des ersten Endes 43.1 aufgeweitet ist. Dies kann beispielsweise im Rahmen der Fertigung der Hohlprofile 40 erfolgen. Im Bereich seines anderen Endes ist das erste Hohlprofil 40.1 entsprechend dem zweiten Ende 43.2 des anderen Hohlprofils 40.2 ausgebildet. Auch bei diesem Ausführungsbeispiel ist die Hülse 50 somit in Längsrichtung verschiebefest bezüglich des ersten Hohlprofils 40.1 und mittels Schiebesitz verschiebbar bezüglich des anderen Hohlprofils 40.2 an den Hohlprofilen 40.1, 40.2 befestigt.

In einem weiteren Ausführungsbeispiel, dass in Figur 4 gezeigt ist, ist die Verbindungshülse 50 als eine Kunststoffklemmmuffe ausgebildet. Diese weist Innenflächen 108 auf, die ausgehend von den Stirnseiten zu einer Mitte 110 der Klemmmuffe hin verjüngend, insbesondere konisch, zusammenlaufen. Dass des konischen Zusammenlaufens wäre auch ein stufiges Zusammenlaufen der Flächen 108 denkbar. Dabei ist vorgesehen, dass die engste Stelle der Innenflächen 108 im Bereich der Mitte 110 einen Innendurchmesser 112 aufweist, der ein problemloses Hindurchführen des Heizkabels 10 erlaubt. Wenn das Heizkabel 10 beispielsweise einen Außendurchmesser von 7,2 mm aufweist, hat die Klemmmuffe in ihrem Mittenbereich 110 beispielsweise einen Innendurchmesser von 9,0 mm. An den Stirnseiten der Klemmmuffe haben die Innenflächen 108 vorzugsweise einen Innendurchmesser, der auf den Außendurchmesser der Hohlprofile 40 abgestimmt ist. Vorzugsweise ist der Innendurchmesser an den Stirnseiten der Klemmmuffel geringfügig größer als der Außendurchmesser der Hohlprofile 40, um ein einfacheres Einführen der Hohlprofile 40 in die Klemmmuffe zu ermöglichen. Bei dem in der Zeichnung gezeigten Beispiel werden die Hohlprofile 40.1, 40.2 stirnseitig in die Klemmmuffe eingeführt, wobei das Material der Klemmmuffe radial nach außen gedrückt wird. Damit sind die Hohlprofile 40.1, 40.2 zunächst mittels Reibschluss in der als Klemmmuffe ausgebildeten Verbindungshülse 50 gehalten. Um eine Längsverschiebbarkeit des ersten Hohlprofils 40.1 gegenüber der Klemmmuffe zu verhindern, ist es denkbar - ähnlich wie in Figur 3 gezeigt - einen Klebstoff zwischen der Innenfläche 108 der Klemmmuffe und der Außenfläche des ersten Hohlprofils 40.1 im Bereich des ersten Endes 43.1 einzubringen. Ebenso wäre es denkbar, um eine Längsverschiebbarkeit des zweiten Hohlprofils 40.2 gegenüber der Klemmmuffe zu fördern, zwischen die beiden Teile ein Gleitmittel einzubringen.

In Figur 4 ist eine zweiseitige Klemmmuffe gezeigt, die auf beiden Seiten verjüngend zulaufende Innenflächen 108 aufweist. Selbstverständlich wäre es auch denkbar, dass lediglich eine Seite der Klemmmuffe verjüngend zulaufende Innenflächen 108 aufweist und die andere Seite der Klemmmuffe auf andere Weise ausgestaltet ist, beispielsweise entsprechend einer Verbindungshülse 50, wie sie in Figur 3 gezeigt ist, mit Innenflächen 108, die parallel zur Längsachse 104 verlaufen (sog. einseitige Klemmmuffe).

Gemäß einem weiteren Ausführungsbeispiel, das in Figur 5 gezeigt ist, umfasst die Verbindungshülse 50 lediglich einen Schrumpfschlauch, der unmittelbar und direkt auf die Außenflächen der stirnseitig aneinandergrenzenden Hohlprofile 40.1, 40.2 im Bereich einer Stoßstelle zwischen den ersten und zweiten Enden 43.1, 43.2 aufgebracht und daran befestigt ist. Der Schrumpfschlauch ist vorzugsweise auf seiner den Hohlprofilen 40 zugewandten Innenfläche mit einem Klebestoff, bspw. einem Schmelzkleber beschichtet. Wenn der über die Hohlprofile 40 geschobene Schrumpfschlauch erwärmt wird, schrumpft er auf die Außenwandung der Hohlprofile 40 auf. Dies erfolgt unter Einbringung von Wärmeenergie, beispielsweise mittels einer Heißluftpistole oder eines Bunsenbrenners. Bei diesem Wärmeeintrag wird auch der Schmelzkleber erwärmt. Beim Aufschrumpfen des Schrumpfschlauches erfolgt mithin gleichzeitig eine Verklebung des Schrumpfschlauchs mit den Rohrenden 43, so dass eine Längsverschiebbarkeit der Hohlprofile 40.1, 40.2 relativ zu dem Schrumpfschlauch unmöglich ist. Auf diese Weise wird eine hochfeste Verbindung für die aneinandergereihten Hohlprofile 40 erzeugt. Diese Verbindung ist auch wasserdicht, da der Schrumpfschlauch im Übergang zu den Hohlprofilen 40 eine dichte Verbindung bildet. Im Bereich der Stoßstelle zwischen den Hohlprofilen 40.1, 40.2 bildet der Schrumpfschlauch jedoch einen Elastizitätsbereich 50a, der eine Längsverschiebbarkeit von aneinandergrenzenden Hohlprofilen 40.1, 40.2 relativ zueinander ermöglicht, so dass Längenänderungen der Hohlprofile 40.1, 40.2 kompensiert werden können.

## Patentansprüche

1. Spalierobstanlage, insbesondere Weinbauanlage, für in Reihe (100) gestellte Obstpflanzen (20), die an einem Befestigungsdraht (32) vorzugsweise eines Drahtrahmengerüsts (30) befestigbar sind, wobei der Befestigungsdraht (32) zwischen Tragpfosten (31) einer Pflanzreihe (100) gespannt ist und wobei eine Heizeinrichtung vorgesehen ist,
**dadurch gekennzeichnet,**
**dass** die Heizeinrichtung je Pflanzreihe (100) mindestens zwei stirnseitig aneinander gereihte Hohlprofile (40) mit einer Längserstreckung entlang einer Längsachse (104) und ein in den Hohlprofilen (40) geführtes Heizkabel (10) aufweist, das über die Hohlprofile (40) an dem Befestigungsdraht (32) befestigt ist, und
**dass** die Heizeinrichtung ferner Verbindungshülsen (50) zum Verbinden aneinander gereihter Hohlprofile (40.1, 40.2) miteinander im Bereich ihrer Stirnseiten aufweist, wobei die Verbindungshülsen (50)
entweder jeweils an einem ersten Ende (43.1) eines ersten Hohlprofils (40.1) derart ausgebildet oder befestigt sind, dass sie in Längsrichtung verschiebefest bezüglich des ersten Hohlprofils (40.1) sind, und die an einem zweiten Ende (43.2) eines stirnseitig an das erste Ende (43.1) des ersten Hohlprofils (40.1) angrenzenden anderen Hohlprofils (40.2) derart mit einem Schiebesitz befestigt sind, dass eine relative Verschiebbarkeit zwischen der Verbindungshülse (50) und dem anderen Hohlprofil (40.2) in Längsrichtung ermöglicht ist,
oder jeweils an einem ersten Ende (43.1) eines ersten Hohlprofils (40.1) und an einem zweiten Ende (43.2) eines stirnseitig an das erste Ende (43.1) des ersten Hohlprofils (40.1) angrenzenden anderen Hohlprofils (40.2) derart befestigt sind, dass sie in Längsrichtung verschiebefest bezüglich der Hohlprofile (40.1, 40.2) sind, wobei die Verbindungshülsen (50) einen zwischen den stirnseitig aneinander angrenzenden Hohlprofilen (40.1, 40.2) wirkenden Elastizitätsbereich (50a) aufweisen, der eine Verschiebbarkeit der Hohlprofile (40.1, 40.2) relativ zueinander in Längsrichtung ermöglicht.

2. Spalierobstanlage nach Anspruch 1, **dadurch gekennzeichnet, dass** die Verbindungshülsen (50) separat von den Hohlprofilen (40) ausgebildet und jeweils mittels eines Reibschlusses, Formschlusses oder Stoffschlusses an dem ersten Ende (43.1) eines ersten Hohlprofils (40.1) befestigt sind.

3. Spalierobstanlage nach Anspruch 1 oder 2, **dadurch gekennzeichnet, dass** die Verbindungshülsen (50) aus Metall, insbesondere Aluminium oder einer Aluminiumlegierung, oder einem formstabilen Kunststoff gefertigt sind.

4. Spalierobstanlage nach einem der Ansprüche 1 bis 3, **dadurch gekennzeichnet, dass** zwischen einer Innenfläche der Verbindungshülsen (50), die an einer Außenfläche eines ersten Hohlprofils (40.1) im Bereich des ersten Endes (43.1) des ersten Hohlprofils (40.1) anliegt, und der Außenfläche im Bereich des ersten Endes (43.1) des ersten Hohlprofils (40.1) ein Klebstoff eingebracht ist.

5. Spalierobstanlage nach einem der Ansprüche 1 bis 3, **dadurch gekennzeichnet, dass** zwischen einer Innenfläche der Verbindungshülsen (50), die an einer Außenfläche eines ersten Hohlprofils (40.1) im Bereich des ersten Endes (43.1) des ersten Hohlprofils (40.1) anliegt, und der Außenfläche im Bereich des ersten Endes (43.1) des ersten Hohlprofils (40.1) eine Presspassung ausgebildet ist.

6. Spalierobstanlage nach einem der Ansprüche 1 bis 3, **dadurch gekennzeichnet, dass** die Verbindungshülsen (50) Kunststoffklemmmuffen umfassen, deren Innenflächen (108) zumindest auf einer Seite der Kunststoffklemmmuffen von einer Stirnseite aus zu einer Mitte (110) hin verjüngend, insbesondere konisch oder stufig, aufeinander zulaufen, so dass zumindest eines der Hohlprofile (40.1, 40.2) im Bereich der verjüngend zulaufenden Innenfläche (108) mittels Reibschluss gehalten ist.

7. Spalierobstanlage nach einem der Ansprüche 1 bis 3, **dadurch gekennzeichnet, dass** die Verbindungshülsen (50) jeweils einen Schrumpfschlauch aus einem Polyolefin, insbesondere Polyethylen, umfassen, dessen Innendurchmesser sich durch Wärmezufuhr verkleinert, wobei der Schrumpfschlauch direkt auf Außenflächen der ersten und zweiten Enden (43.1, 43.2) der Hohlprofile (40.1, 40.2) angeordnet und daran befestigt ist.

8. Spalierobstanlage nach Anspruch 1, **dadurch gekennzeichnet, dass** die Verbindungshülsen (50) jeweils einstückig mit einem Hohlprofil (40) durch endseitiges Aufweiten des Hohlprofils (40) an dem ersten Ende (43.1) ausgebildet sind.

9. Spalierobstanlage nach einem der Ansprüche 1 bis 8, **dadurch gekennzeichnet, dass** die Hohlprofile (40) aus Metall, insbesondere Aluminium oder einer Aluminiumlegierung, gefertigt sind, das an seiner nach außen gerichteten Oberfläche unbehandelt, insbesondere nicht beschichtet ist.

10. Spalierobstanlage nach einem der Ansprüche 1 bis 9, **dadurch gekennzeichnet, dass** das Heizkabel (10) einen elektrisch leitenden Heizleiter (16) und einen elektrisch leitenden Kaltleiter (17) aufweist, wobei sowohl der Heizleiter (16) als auch der Kaltleiter (17) von einem gemeinsamen Mantel (11) umgeben sind.

11. Heizeinrichtung zur Verwendung in einer Spalierobstanlage gemäß einem der Ansprüche 1 bis 10,
**dadurch gekennzeichnet,**
**dass** die Heizeinrichtung mehrere stirnseitig aneinander gereihte Hohlprofile (40) mit einer Längserstreckung entlang einer Längsachse (104) und ein in den Hohlprofilen (40) geführtes Heizkabel (10) aufweist, das über die Hohlprofile (40) an einem Befestigungsdraht (32) der Spalierobstanlage befestigt ist, und
**dass** die Heizeinrichtung ferner Verbindungshülsen (50) zum Verbinden aneinander gereihter Hohlprofile (40.1, 40.2) miteinander im Bereich ihrer Stirnseiten aufweist, wobei die Verbindungshülsen (50) jeweils an einem ersten Ende (43.1) eines ersten Hohlprofils (40.1) derart ausgebildet oder befestigt sind, dass sie in Längsrichtung verschiebefest bezüglich des ersten Hohlprofils (40.1) sind, und die an einem zweiten Ende (43.2) eines stirnseitig an das erste Ende (43.1) des ersten Hohlprofils (40.1) angrenzenden anderen Hohlprofils (40.2) derart mit einem Schiebesitz befestigt sind, dass eine relative Verschiebbarkeit zwischen der Verbindungshülse (50) und dem anderen Hohlprofil (40.2) in Längsrichtung ermöglicht ist.

12. Heizeinrichtung nach Anspruch 11, **dadurch gekennzeichnet, dass** das Heizkabel (10) einen elektrisch leitenden Heizleiter (16) und einen elektrisch leitenden Kaltleiter (17) aufweist, wobei sowohl der Heizleiter (16) als auch der Kaltleiter (17) von einem gemeinsamen Mantel (11) umgeben sind.

13. Heizeinrichtung nach Anspruch 11 oder 12, **dadurch gekennzeichnet, dass** das Heizkabel (10) einen Außendurchmesser im Bereich von 5 bis 10 mm, besonders bevorzugt im Bereich von 7 bis 8 mm, ganz besonders bevorzugt von 7,2 mm aufweist, und/oder dass die Hohlprofile (40) einen Innendurchmesser aufweisen, der höchstens wenige Millimeter, bevorzugt weniger als 1 mm, ganz besonders bevorzugt 0,8 mm größer als ein Außendurchmesser des Heizkabels (10) ist.

14. Heizeinrichtung nach einem der Ansprüche 11 bis 13, **dadurch gekennzeichnet, dass** die Heizeinrichtung, insbesondere das Heizkabel (10), ausgebildet ist, eine elektrische Leistungsaufnahme von <12 W/m, besonders bevorzugt von <10 W/m aufzuweisen.

15. Heizeinrichtung nach einem der Ansprüche 11 bis 14, **gekennzeichnet durch** einen der Ansprüche 1 bis 10.
